(19) Europäisches Patentamt
European Patent Office
Office européen des brevets

(11) **EP 2 631 708 B1**

(12) **FASCICULE DE BREVET EUROPEEN**

(45) Date de publication et mention
de la délivrance du brevet:
**22.06.2016 Bulletin 2016/25**

(51) Int Cl.:
***G02F 1/11*** *(2006.01)*

(21) Numéro de dépôt: **13305154.0**

(22) Date de dépôt: **08.02.2013**

(54) **Dispositif acousto-optique à transducteur acoustique**

Akustooptische Vorrichtung mit akustischem Wandler

Acoustic-optical device with acoustic transducer

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2012 FR 1251683**

(43) Date de publication de la demande:
**28.08.2013 Bulletin 2013/35**

(73) Titulaire: **Fastlite**
**06560 Valbonne (FR)**

(72) Inventeurs:
• **Kaplan, Daniel**
**75006 Paris (FR)**
• **Maksimenka, Raman**
**91620 Palaiseau (FR)**

(74) Mandataire: **Mazabraud, Xavier**
**Cabinet Moutard**
**35, rue de la Paroisse**
**78000 Versailles (FR)**

(56) Documents cités:
**GB-A- 1 468 911**

• **GOTTLIEB M ET AL: "Fabrication and characterization of mercurous chloride acoustooptic devices", APPLIED OPTICS USA, vol. 26, no. 21, 1 novembre 1987 (1987-11-01), pages 4681-4687, XP002683717, ISSN: 0003-6935**
• **TOURNOIS P: "Acousto-optic programmable dispersive filter for adaptive compensation of group delay time dispersion in laser systems", OPTICS COMMUNICATIONS, NORTH-HOLLAND PUBLISHING CO. AMSTERDAM, NL, vol. 140, no. 4-6, 1 août 1997 (1997-08-01), pages 245-249, XP004082630, ISSN: 0030-4018, DOI: 10.1016/S0030-4018(97)00153-3**
• **TOURNOIS ET AL: "Design of acousto-optic programmable filters in mercury halides for mid-infrared laser pulse shaping", OPTICS COMMUNICATIONS, NORTH-HOLLAND PUBLISHING CO. AMSTERDAM, NL, vol. 281, no. 15-16, 1 août 2008 (2008-08-01), pages 4054-4056, XP022712468, ISSN: 0030-4018, DOI: 10.1016/J.OPTCOM.2008.04.002 [extrait le 2008-04-23]**
• **RAMAN MAKSIMENKA ET AL: "Mid-infrared high-frequency high-resolution reflective acousto-optic filters in mercury halides", OPTICS COMMUNICATIONS, NORTH-HOLLAND PUBLISHING CO. AMSTERDAM, NL, vol. 285, no. 5, 27 octobre 2011 (2011-10-27), pages 715-719, XP028353368, ISSN: 0030-4018, DOI: 10.1016/J.OPTCOM.2011.10.078 [extrait le 2011-11-03]**

**EP 2 631 708 B1**

**EP 2 631 708 B1**

**Description**

La présente invention concerne un dispositif acousto-optique à transducteur acoustique hybride.

Le dispositif présenté s'applique au contrôle de faisceaux optiques pour le domaine du moyen infrarouge allant d'une longueur d'onde $\lambda$ dans le vide de 3 à 20 micromètres.

Les dispositifs acousto-optiques sont utilisés dans l'état de l'art pour diverses applications de contrôle des faisceaux optiques. A titre d'exemples de tels contrôles, on peut citer la modulation d'amplitude, la déviation angulaire, le filtrage spectral et la mise en forme temporelle des impulsions. En particulier, dans le contexte de cette dernière application, Pierre Tournois a montré [P. Tournois, « Acousto-optic programmable dispersive filter for adaptive compensation of group delay time dispersion in laser systems », Opt. Commun., vol. 140, n°. 4-6, p. 245-249, août 1997] la possibilité d'utiliser un dispositif acousto-optique à base de paratellurite pour réaliser un contrôle de la forme temporelle d'impulsions laser ultra-courtes. La plupart de ces utilisations de dispositifs acousto-optiques concernent actuellement le domaine spectral du visible et du proche infrarouge.

Il y a un intérêt certain à étendre les applications au domaine du moyen infrarouge, c'est à dire la gamme de longueur d'onde allant de 3 à 20 micromètres. En effet, ce domaine correspond à la gamme de fréquence des vibrations dans les molécules et les matériaux solides et les dispositifs acousto-optiques pourraient favorablement être inclus dans les montages expérimentaux permettant d'étudier ces vibrations, ou de caractériser les matériaux par spectroscopie vibrationnelle. Cependant, la plupart des matériaux utilisés dans l'état de l'art pour la réalisation de dispositifs acousto-optiques ne sont pas transparents dans cette gamme de longueur d'onde. Par exemple, la paratellurite (TeO2), qui est un matériau très utilisé, ne transmet pas efficacement la lumière de longueur d'onde supérieure à 4 micromètres.

Parmi les matériaux à propriétés acousto-optiques pouvant potentiellement être utilisés dans le moyen infrarouge, les halogénures de mercure constituent des candidats particulièrement intéressants tels : le Calomel ($Hg_2Cl_2$), le Bromure de Mercure ($Hg_2Br_2$) et l'Iodure de Mercure ($Hg_2I_2$) ; ils appartiennent à la classe cristalline tétragonale ; ils sont transparents dans toute la gamme du moyen infrarouge et ont des efficacités acousto-optiques comparables à celles de la paratellurite. Ils ont des vitesses de propagation acoustique selon la direction [110] respectivement de 347, 282, 253 m/s. L'ordre de grandeur des fréquences à 10 microns est alors 200 MHz, permettant des longueurs d'atténuation acoustiques dépassant le centimètre. La croissance cristalline de ces matériaux a été décrite dans la littérature dans [C. Barta, « Growth, properties and technical applications of mercurous halide crystals », Journal of Cristal Growth, vol. 65, n°. 1-3, p. 351-352, déc. 1983] et des dispositifs acousto-optiques décrits [P. Tournois, « Design of acousto-optic programmable filters in mercury halides for mid-infrared laser pulse shaping », Opt. Commun., vol. 281, n°. 15-16, p. 4054-4056, août 2008 ; R. Maksimenka et P. Tournois, « Mid-infrared high-frequency high-resolution reflective acousto-optic filters in mercury halides », Optics Communications, vol. 285, n°. 5, p. 715-719, mars 2012; M. Gottlieb, A. P. Goutzoulis, et N. B. Singh, « Fabrication and characterization of mercurous chloride acoustooptic devices », Applied Optics, vol. 26, n°. 21, p. 4681-4687, nov. 1987].

Un problème technologique sérieux décrit en particulier par [M. Gottlieb, A. P. Goutzoulis, et N. B. Singh, « Fabrication and characterization of mercurous chloride acoustooptic devices », Applied Optics, vol. 26, n°. 21, p. 4681-4687, nov. 1987] est la réactivité chimique des matériaux utilisés pour réaliser le transducteur acoustique avec l'halogénure de Mercure. Un transducteur est monté sur le cristal acousto-optique pour générer une onde acoustique généralement transverse à partir d'un signal électrique, ce transducteur comprend en général une électrode métallique au contact avec le cristal acousto-optique. Or, la plupart des matériaux métalliques réagissent avec l'halogénure de mercure. Cette réactivité est liée à la propension du mercure lui même à former des amalgames avec les métaux. Les auteurs cherchent à minimiser ces effets par le choix de métaux particuliers comme l'argent qui ont une plus faible réactivité. Il est cependant désirable d'utiliser une technologie qui ne comporte aucun contact entre l'halogénure de mercure et un métal.

Le préambule de la revendication 1 est basé sur ce document.

L'invention a pour objet un dispositif acousto-optique à transducteur acoustique hybride comprenant :

- un cristal d'halogénure de mercure,
- un transducteur acoustique hybride, comprenant notamment
- un cristal de paratellurite, et
- un composant intermédiaire solidaire, d'une part, d'une face dudit cristal de paratellurite et, d'autre part, d'une face dudit cristal d'halogénure de mercure, les dites faces étant en vis-à-vis l'une de l'autre.

Le matériau constituant ledit composant intermédiaire est choisi pour permettre la transmission d'ondes acoustiques de cisaillement pures générées par ledit transducteur acoustique.

Un mode de mise en oeuvre du dispositif selon l'invention sera décrit ci-après, à titre d'exemple non limitatif, avec référence aux dessins annexés dans lesquels :

La figure 1 est une représentation schématique d'une configuration hybride, et

La figure 2 représente un dispositif acousto-optique selon l'invention.

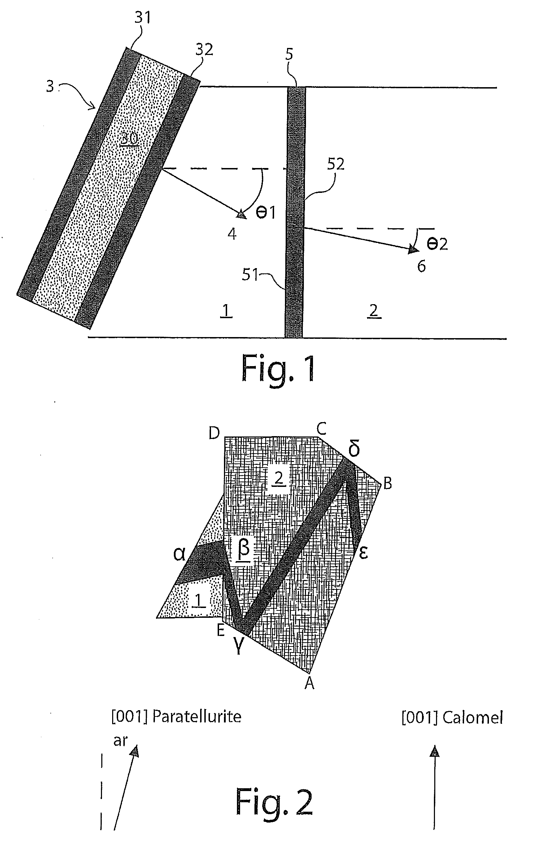

L'exemple représenté sur la figure 1 concerne une configuration hybride, dans laquelle un transducteur 3 est monté sur un matériau intermédiaire 1, peu réactif avec l'halogénure de mercure 2. Le matériau 30 utilisé pour le transducteur 3 peut être le Niobate de Lithium. Deux électrodes 31 et 32 déposées sur ce matériau permettent d'appliquer une tension électrique générant un champ électrique dans le matériau. L'électrode 32 est au contact du matériau 1. L'assemblage entre l'électrode 32 et le matériau 1 est en général réalisé par soudure sous pression. L'homme de l'art sait concevoir les caractéristiques géométriques et l'orientation cristalline du matériau 30 pour générer une onde acoustique dans le matériau 1 ayant une orientation de la vitesse acoustique 4 et une polarisation déterminée adaptée à l'application. De manière générale, l'onde acoustique est, soit une onde de compression à polarisation longitudinale, soit une onde de cisaillement à polarisation transverse.

Une onde de vitesse acoustique 4 se propage dans le matériau 1. Cette onde générera à l'interface 5 au moins une onde de vitesse acoustique 6 dans le matériau 2. $\theta_1$ et $\theta_2$ sont respectivement les orientations respectives des vitesses acoustiques 4 et 6 dans les matériaux 1 et 2, mesurées par rapport à la direction normale à leur plan d'interface 5.

L'interface 5 est constitué par un composant intermédiaire 5 solidaire, d'une part, d'une face 51 du matériau 1, par exemple un cristal de paratellurite, et, d'autre part, d'une face 52 du matériau 2, par exemple un cristal d'halogénure de mercure. Les deux faces 51, 52 sont en vis-à-vis de part et d'autre de l'interface 5, de préférence, les faces 51, 52 sont sensiblement parallèles entre elles.

Par ailleurs, pour qu'une telle transmission soit efficace, il faut également que le matériau intermédiaire 1 soit correctement choisi. De manière générale, il est connu qu'une transmission acoustique parfaite entre deux matériaux impliquera deux types de conditions :

- Condition 1 : Les caractéristiques des matériaux et les conditions aux limites à l'interface 5 doivent être telles que la transition à l'interface ne produise qu'une onde transmise dans le matériau 2 et une onde réfléchie dans le matériau 1. Cette condition n'est pas satisfaite lorsqu'il y a conversion de mode : par exemple, une onde longitudinale incidente peut produire deux ondes réfléchies dont l'une est longitudinale et l'autre transverse. Le rendement de transmission efficace pour l'application est alors nécessairement réduit en raison de l'énergie transportée par les ondes correspondant aux modes acoustiques supplémentaires non utilisés dans le dispositif.

- Condition 2 : La condition pour que l'onde réfléchie unique soit d'amplitude nulle est, en fait, une condition d'adaptation d'impédance acoustique à l'interface 5. L'impédance acoustique Z pour un mode propagation donné est le produit de la vitesse acoustique V et de la densité volumique $\rho$. Si les impédances acoustiques de l'onde incidente dans le matériau 1 et de l'onde transmise dans le matériau 2 ne sont pas égales, une partie de l'énergie est perdue dans une onde réfléchie à l'interface.

La condition 2 limite fortement le choix du matériau 1, dans le cas des dispositifs à base d'halogénures de mercure. En effet, ces dispositifs utilisent généralement des ondes acoustiques de cisaillement se propageant dans un plan (110) de la structure tétragonale du matériau, qui supporte par raison de symétrie la propagation d'un mode pur de cisaillement à polarisation transverse. La vitesse de ces ondes acoustiques transverses est particulièrement faible (par exemple 347 m/s dans le Calomel sur l'axe [110]) conduisant à des impédances acoustiques plus faibles que celles caractérisant la majorité des matériaux acousto-optiques.

Il est cependant à noter que la paratellurite possède également une structure tétragonale, conduisant également à un mode transverse pur dans son plan (110) et de vitesse acoustique transverse relativement faible (615 m/s). L'orientation cristalline relative des matériaux 1 et 2 sera choisie de manière à ce que les plans (110) des deux matériaux soient confondus, une onde transverse de vitesse 4 dans le matériau paratellurite 1 se propageant dans ce plan produira par raison de symétrie une onde transverse de vitesse 6 dans le matériau 2 Halogénure de Mercure sans conversion de mode, satisfaisant ainsi la condition 1. Par ailleurs, la densité de la paratellurite ($\rho$=5990 kg/m$^3$) est suffisamment voisine de celle des halogénures ($\rho$=7190 kg/m$^3$ pour le Calomel) pour qu'il existe une gamme de directions de vitesses acoustiques pour laquelle l'adaptation d'impédance est réalisable. Il sera ainsi possible, pour tous les dispositifs compatibles avec cette gamme de directions et de vitesses, de réaliser un transducteur hybride n'ayant théoriquement aucune perte résultant, soit de la conversion de mode aux interfaces, soit de l'adaptation d'impédance. Si les contraintes de conception des dispositifs conduisent à des orientations et des vitesses en dehors de cette gamme, la proximité des impédances acoustiques conduira en général à des pertes par réflexion faibles compatibles avec de nombreuses applications.

Il faut noter que, pour atteindre une transmission idéale dans la situation considérée, le joint collé à l'interface 5 devra être mince et posséder une grande rigidité mécanique au cisaillement, pour minimiser les pertes par réflexion ou absorption dues au joint lui même. L'homme de l'art pourra choisir le matériau adéquat parmi les divers adhésifs en tenant compte en particulier de ces critères.

De manière plus précise, si V1 est la vitesse de l'onde incidente et V2 la vitesse de l'onde transmise à l'interface 5, la génération acoustique dans le matériau 2 se fera sans pertes théoriques par réflexion si les conditions suivantes sont réalisées :

$$\frac{\sin\theta_1}{V_1} = \frac{\sin\theta_2}{V_2} \quad \quad (1)$$

$$\rho_1 V_1 \cos\theta_1 = \rho_2 V_2 \cos\theta_2$$

$\rho_1$ étant la densité de TeO$_2$ et $\rho_2$ celle de l'halogénure de Mercure.

Pour une application donnée, dans un cristal d'halogénure de Mercure donné, l'angle $\theta_2$ et la vitesse $V_2$ sont imposés ; il sera donc nécessaire de déterminer s'il existe un angle $\theta_1$, associé à une vitesse $V_1$, qui satisfasse les relations (1). Pour cela, en satisfaisant à la condition de parallélisme des plans (110) des deux matériaux, un paramètre de réglage est accessible, à savoir : l'angle d'inclinaison *ar* de l'axe [001] du TeO2 par rapport à l'axe [001] de l'halogénure de Mercure, axes contenus dans les plans (110) respectifs des deux matériaux.

L'exemple représenté sur la figure 2 concerne un dispositif acousto-optique comprenant un cristal de Calomel 2 de section droite [ABCDE]. Les traces AE et CB représentent respectivement les faces d'entrée et de sortie de l'onde optique dans le dispositif acousto-optique. La face DE est l'interface avec le matériau paratellurite intermédiaire, c'est à dire l'interface 5 de la figure 1. Sa normale est perpendiculaire à l'axe [001].

Le chemin $\alpha\beta\gamma\delta\varepsilon$ représente la propagation du faisceau acoustique dans le dispositif. L'onde acoustique est générée en $\alpha$ par un transducteur en Niobate de Lithium, transmise dans l'halogénure de mercure en $\beta$, réfléchie sur la face d'entrée optique AE en $\gamma$ et interagit avec l'onde optique sur le chemin $\gamma\delta$. Après réflexion sur la face de sortie optique CB, elle est absorbée en $\varepsilon$ par la face BA, qui est avantageusement couverte d'un matériau absorbant acoustique.

Il faut noter que les orientations de propagation de ce faisceau acoustique ne sont pas identiques aux orientations des vitesses acoustiques car les deux matériaux sont fortement anisotropes. L'homme de l'art sait prendre en compte la relation entre ces deux orientations déduite des coefficients acoustiques caractéristiques des matériaux concernés. La direction $\gamma\delta$ est choisie pour optimiser l'efficacité de l'interaction acousto-optique comme indiqué dans la publication [P. Tournois, « Design of acousto-optic programmable filters in mercury halides for mid-infrared laser pulse shaping », Opt. Commun., vol. 281, n°. 15-16, p. 4054-4056, août 2008]. L'angle correspondant est de 51.8 degrés par rapport à la normale à la face DE. Le calcul de l'orientation correspondante de la vitesse, suivi du calcul de la réflexion sur la face AE, conduit à un angle $\theta_2$ de -21.16 degrés par rapport à la normale à l'interface DE et à une vitesse acoustique de 508 m/s. Les relations 1 permettent de calculer les directions $\theta_1$= -26.962° et la vitesse V1=638 m/s dans la paratellurite, qui conduisent à l'adaptation d'impédance entre la paratellurite et le calomel.

Comme la vitesse V1 calculée est comprise dans l'intervalle 615m/s à 2100m/s couvert par la vitesse en fonction de l'angle de propagation dans le plan (110) de la paratellurite, il existe des solutions acoustiques possibles. Pour obtenir ces solutions, il faut incliner l'axe [001] du TeO2 par rapport à l'axe [001] du Calomel d'un angle *ar* satisfaisant l'équation :

$$V_1 = \sqrt{615^2.\cos^2(\theta_1 - ar) + 2100^2.\sin^2(\theta_1 - ar)} = 638\, m/s$$

Dans la conception présentée, l'angle *ar* vaut -31.789°, qui est une des solutions numériques de l'équation ci-dessus.

Pour une onde acoustique monochromatique donnée, l'onde optique n'est diffractée que pour la fréquence satisfaisant la condition de Bragg. Le dispositif discuté ci-dessous, réalise ainsi un filtre de fréquence à résolution élevée en raison du parallélisme des faisceaux acoustiques et optiques qui permet une grande longueur d'interaction. En utilisant des ondes poly-chromatiques, l'homme de l'art pourra réaliser un dispositif de mise en forme temporelle d'impulsions ultracourtes en suivant les prescriptions de la référence [P. Tournois, « Design of acousto-optic programmable filters in mercury halides for mid-infrared laser pulse shaping », Opt. Commun., vol. 281, n°. 15-16, p. 4054-4056, août 2008].

Pour préciser plus avant les performances de l'invention, l'adaptation d'impédance sera considérée de manière générale pour une propagation dans les plans (110) respectifs des deux matériaux et une interface constituée par une face du calomel normale à ce plan et contenant l'axe [001] du calomel.

Les solutions des équations (1) seront obtenues à condition que la vitesse V1 soit supérieure à la vitesse minimale de la paratellurite, soit 615 m/S. Le calcul montre que l'angle minimal d'incidence acoustique pour satisfaire à cette condition est de 20.0 degrés. La conception de la figure 2, conduit à une incidence de 21.16 degrés légèrement supérieure et donc permettant l'adaptation. Pour les angles inférieurs à 20 degrés, il est impossible d'avoir une adaptation d'impédance parfaite. La désadaptation la plus grande est obtenue lorsque l'incidence est de 0 degré (incidence normale).

Dans cette condition, la meilleure transmission est obtenue dans le cas où les directions [001] des deux cristaux sont alignées, c'est à dire que les directions principales des deux cristaux sont toutes confondues. La perte par réflexion est alors donnée par le oefficient : $\left( \dfrac{\rho_1 V_1 - \rho_2 V_2}{\rho_1 V_1 + \rho_2 V_2} \right)^2$, où $V_1$ et $V_2$ prennent les valeurs correspondant respectivement aux directions perpendiculaires à [001] dans les deux matériaux.

La valeur calculée de cette perte est de 3.7%. La solution proposée par l'invention donne de manière générale des pertes théoriques par réflexion de l'onde acoustique qui sont soit strictement nulles, soit assez faibles pour être compatibles avec la plupart des applications.

L'homme de l'art pourra ainsi mettre en oeuvre d'autres applications connues de l'interaction acousto-optique à la modulation d'amplitude et à la déflexion des faisceaux optiques, telles que décrites par exemple dans la référence [J. Xu et R. Stroud, Acousto-optic devices: principales, design, and applications. Wiley, 1992].

**Revendications**

1.  Dispositif acousto-optique comprenant :

    - un cristal d'halogénure de mercure (2); et,
    - un transducteur acoustique (1,3),

    **caractérisé en ce que** :

    - ledit transducteur comprend notamment un cristal de paratellurite (1) pour y générer une onde acoustique; et,
    - ledit dispositif acousto-optique comprend en outre un composant intermédiaire (5) solidaire, d'une part, d'une face (51) dudit cristal de paratellurite (1) et, d'autre part, d'une face (52) dudit cristal d'halogénure de mercure (2), lesdites faces (51, 52) étant en vis-à-vis l'une de l'autre.

2.  Dispositif selon revendication 1, **caractérisé en ce que** les faces (51, 52) sont sensiblement parallèles entre elles.

3.  Dispositif selon la revendication 1 ou 2, **caractérisé en ce que** les plans [110] du cristal de paratellurite (1) et du cristal d'halogénure de mercure (2) sont parallèles et constituent les plans de propagation acoustique d'ondes transversales de cisaillement.

4.  Dispositif selon l'une des revendications 1 à 3, **caractérisé en ce que** l'angle entre les axes [001] des deux cristaux (1, 2) est défini pour annuler ou minimiser la différence d'impédance acoustique entre les modes de propagation acoustique respectifs dans les deux matériaux.

5.  Procédé pour filtrer une onde optique incidente, **caractérisé en ce qu'**il utilise un dispositif selon l'une des revendications 1 à 4.

6.  Procédé pour dévier angulairement une onde optique incidente, **caractérisé en ce qu'**il utilise un dispositif selon l'une des revendications 1 à 4.

7.  Procédé pour moduler l'amplitude d'une optique incidente, **caractérisé en ce qu'**il utilise un dispositif selon l'une des revendications 1 à 4.

8.  Procédé selon l'une des revendications 5 à 7, **caractérisé en ce que** la gamme de longueur d'onde de ladite onde optique incidente se situe entre 3 à 20 micromètres.

9.  Procédé selon l'une des revendications 5 à 8, **caractérisé en ce que** la direction de propagation de ladite onde optique incidente est parallèle à la direction du faisceau acoustique à l'intérieur du matériau halogénure de mercure (2).

**10.** Procédé de mise en forme temporelle d'impulsions lumineuses ultracourtes, **caractérisé en ce qu'**il comprend un dispositif selon l'une des revendications 1 à 4.

**Patentansprüche**

**1.** Akustisch-optisches Gerät, das folgendes aufweist:

- eine Quecksilberhalogenid-Kristall (2); und
- einen akustischen Wandler (1, 3),

**dadurch gekennzeichnet, dass**:

- der Wandler insbesondere einen Paratellurit-Kristall (1) umfasst, um daraus eine akustische Welle zu erzeugen; und
- das akustisch-optische Gerät weiterhin eine Zwischenlcomponente (5) umfasst, die aus einem Stück besteht einerseits mit einer Fläche (51) des Paratellurit-Kristalls (1) und andererseits einer Fläche (52) des Quecksilberhalogenid-Kristalls (2), wobei die Flächen (51, 52) einander gegenüber liegen.

**2.** Gerät nach Anspruch 1, **dadurch gekennzeichnet, dass** die Flächen (51, 52) im Wesentlichen parallel zueinander sind.

**3.** Gerät nach Anspruch 1 oder 2, **dadurch gekennzeichnet, dass** die [110]-Ebenen des Paratellurit-Kristalls (1) und des Quecksilberhalogenid-Kristalls (2) parallel sind und die akustischen Ausbreitungsebenen von transversalen Scherwellen darstellen.

**4.** Gerät nach einem der Ansprüche 1 bis 3, **dadurch gekennzeichnet, dass** der Winkel zwischen den [001]-Achsen der beiden Kristalle (1, 2) definiert ist, um die Differenz in der akustischen Impedanz zwischen den jeweiligen akustischen Ausbreitungsmoden in den beiden Materialien auszulöschen oder zu minimieren.

**5.** Verfahren zum Filtern einer einfallenden optischen Welle, **dadurch gekennzeichnet, dass** es ein Gerät nach einem der Ansprüche 1 bis 4 einsetzt.

**6.** Verfahren zum winkelmäßigen Umlenken einer einfallenden optischen Welle, **dadurch gekennzeichnet, dass** es ein Gerät nach einem der Ansprüche 1 bis 4 einsetzt.

**7.** Verfahren zum Modulieren der Amplitude einer einfallenden optischen Welle, **dadurch gekennzeichnet, dass** es ein Gerät nach einem der Ansprüche 1 bis 4 einsetzt.

**8.** Verfahren nach einem der Ansprüche 5 bis 7, **dadurch gekennzeichnet, dass** der Wellenlängenbereich der einfallenden optischen Welle zwischen 3 bis 20 $\mu$m liegt.

**9.** Verfahren nach einem der Ansprüche 5 bis 8, **dadurch gekennzeichnet, dass** die Ausbreitungsrichtung der einfallenden optischen Welle parallel zur Richtung des akustischen Strahls im Inneren des Quecksilberhalogenid-Materials (2) ist.

**10.** Verfahren zur temporären Formung von ultrakurzen Lichtimpulsen, **dadurch gekennzeichnet, dass** es ein Gerät nach einem der Ansprüche 1 bis 4 umfasst.

**Claims**

**1.** Acoustic-optical device comprising:

- a mercury halide crystal (2); and,
- an acoustic transducer (1, 3),

**characterised in that**:

- said transducer in particular comprises a paratellurite crystal (1) for generating an acoustic wave therein; and,
- said acoustic-optical device further comprises an intermediate component (5) secured, on the one hand, to a surface (51) of said paratellurite crystal (1) and, on the other hand, to a surface (52) of said mercury halide crystal (2), whereby said surfaces (51, 52) are facing each other.

2. Device according to claim 1, **characterised in that** the surfaces (51, 52) are substantially parallel to each other.

3. Device according to claim 1 or 2, **characterised in that** the planes [110] of the paratellurite crystal (1) and of the mercury halide crystal (2) are parallel and form the acoustic propagation planes of the transverse shear waves.

4. Device according to one of claims 1 to 3, **characterised in that** the angle between the axes [001] of the two crystals (1, 2) is determined such that it cancels or minimises the difference in acoustic impedance between the respective acoustic propagation modes in the two materials.

5. Method for filtering an incident optical wave, **characterised in that** it uses a device according to one of claims 1 to 4.

6. Method for the angular deviation of an incident optical wave, **characterised in that** it uses a device according to one of claims 1 to 4.

7. Method for modulating the amplitude of an incident optical wave, **characterised in that** it uses a device according to one of claims 1 to 4.

8. Method according to one of claims 5 to 7, **characterised in that** the wavelength range of said incident optical wave is between 3 and 20 micrometres.

9. Method according to one of claims 5 to 8, **characterised in that** the direction of propagation of said incident optical wave is parallel to the direction of the sound beam within the mercury halide material (2).

10. Method for the temporal shaping of ultrashort light pulses, **characterised in that** it comprises a device according to one of claims 1 to 4.

Fig. 1

[001] Paratellurite

[001] Calomel

Fig. 2

**EP 2 631 708 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. TOURNOIS.** Acousto-optic programmable dispersive filter for adaptive compensation of group delay time dispersion in laser systems. *Opt. Commun.,* Août 1997, vol. 140 (4-6), 245-249
- **C. BARTA.** Growth, properties and technical applications of mercurous halide crystals. *Journal of Cristal Growth,* Décembre 1983, vol. 65 (1-3), 351-352
- **P. TOURNOIS.** Design of acousto-optic programmable filters in mercury halides for mid-infrared laser pulse shaping. *Opt. Commun.,* Août 2008, vol. 281 (15-16), 4054-4056
- **R. MAKSIMENKA ; P. TOURNOIS.** Mid-infrared high-frequency high-resolution reflective acousto-optic filters in mercury halides. *Optics Communications,* Mars 2012, vol. 285 (5), 715-719
- **M. GOTTLIEB ; A. P. GOUTZOULIS ; N. B. SINGH.** Fabrication and characterization of mercurous chloride acoustooptic devices. *Applied Optics,* Novembre 1987, vol. 26 (21), 4681-4687
- **J. XU ; R. STROUD.** Acousto-optic devices: principales, design, and applications. Wiley, 1992